Europäisches Patentamt

European Patent Office

Office européen des brevets

(11) Publication number: 0 344 850
A2

# EUROPEAN PATENT APPLICATION

(21) Application number: 89201357.4

(22) Date of filing: 29.05.89

(51) Int. Cl.⁴: H02H 3/16 , H01R 13/713

(30) Priority: 31.05.88 IT 488040

(43) Date of publication of application:
06.12.89 Bulletin 89/49

(84) Designated Contracting States:
AT BE CH DE ES FR GB GR IT LI LU NL SE

(71) Applicant: MICROELETTRICA SCIENTIFICA
S.p.A.
Via Alberelle, 56/58
I-20089 Rozzano (Milano)(IT)

(72) Inventor: Sacerdoti, Giancarlo
Via delle Montagne Rocciose, 62
IT-00144 Roma(IT)
Inventor: Sacerdoti, Daniele
Via delle Montagne Rocciose, 62
IT-00144 Roma(IT)

(74) Representative: Faraggiana, Vittorio, Dr. Ing.
Ingg. Guzzi e Ravizza S.r.l. Via Boccaccio, 24
I-20123 Milano(IT)

(54) Safety device for detecting ground current and safety electrical plug equipped with said device.

(57) Safety device for detection of ground current designed to signal rapid variations of said current starting from a memorized value, such as those outside a predetermined range of variability, through comparison of values variable in time of voltages proportional to the ground current with reference voltage values which divide said initial value and the range of variability and also through generation of a control signal in response to the condition in which the ground current undergoes rapid variations and/or assumes values outside said range of variability. there is also described an electrical safety plug equipped with said device and which is capable of breaking the connection with the electrical power outlet in response to the generation of said control signal.

FIG. 2

# SAFETY DEVICE FOR DETECTING GROUND CURRENT AND SAFETY ELECTRICAL PLUG EQUIPPED WITH SAID DEVICE

The present invention relates to a safety device for detecting ground current of the coverings or containers of electrical equipment and an electrical safety plug fitted with said device which causes automatic breaking of the contact between the plug and the electrical current outlet when the ground current assumes values outside a predetermined variabiality range.

The greatest electrical dangers incurred by persons working in contact with electrical equipment such as household appliances, calculators, television sets, electromedical equipment and the like arise principally from breaking of the ground contact of the metal containers of various apparatuses and poor insulation between the power supply and the containers. In particular, in hospital areas the following standards must be observed:- (a) all ground connections of the instruments must lead individually to an equipotential node and (b) instruments must be powered by insulating transformers equipped with protective shielding also connected to the equipotential node.

In general the current which passes through the connection between the individual instruments and the equipotential node is different from that passing through the other connections of the same type since it depends on the capacitance to ground of the container and of the windings of the insulation transformer, of the insulation resistance between the power circuit and the container and, to a much lesser degree, on the resistance of the connecting cable.

If the cable is not broken and the insulation resistances are greater than the limits set by the standards, the aforesaid current varies normally in a range of from 10 to 20 microamperes. Thus a protective device which signals a dangerous situation created by an anomaly in the ground current must fulfill the following purposes:- (a) indicate when the ground current falls below a preset value which occurs when the ground connection is broken, (b) indicate rapid increases in ground current which occur with insulation failure and (c) signal when ground current exceeds a predetermined limit.

To carry out a preventive protection action, in the first case power must be cut off rapidly by pulling out the plug, e.g. within .1 sec. In the second, the occurence is signalled to an operator by a visual and/or acoustical alarm signal. In the third case the power switch must be opened.

The object of the present invention on the basis of one of its first aspects is to accomplish a safety device which would sense the ground current of the coverings or containers of electrical equipment and generate a signal each time said current assumes a value outside the predetermined varability range and/or undergoes a rapid variation.

This object is achieved by a device comprising means for sensing a voltage proportional to the ground current which, after amplification and rectification, is supplied to the input of threshhold comparator means to whose second inputs are supplied the minimum and maximum threshhold values respectively which define the variability range admissible for the voltage proportional to the ground current. If the ground current assumes values outside said variability range the comparators produce at their output a signal which enables for example generation of a visual and/or acoustic alarm, i.e. commands other activating devices to carry out a protective action.

In accordance with another form of embodiment of the present invention there can also be provided other threshhold comparator means which compare a voltage proportional to the ground current variable in time with a reference voltage given by the value of the aforesaid voltage proportional to the ground current memorized periodically or upon inserting the electrical plug of the apparatus in the power outlet. Therefore, in case of rapid variations of the ground current, these additional threshhold comparator means generate at their output a signal for activation of alarms and/or other protective devices.

On the basis of a second aspect thereof another object of the present invention is to accomplish an electrical safety plug equipped with the device for sensing the abovedescribed ground current and designed to automatically break the connection with the electric power outlet by the effect of a command signal generated by the abovesaid device.

This object is achieved by a power plug with three connectors and made up of two bodies one of which is movable in relation to the other and is designed to be introduced in a cavity of the latter by the compression effect of a helical spring connecting the two bodies and wound around the central ground connector of the electric plug.

One body acts as a conventional support for the three male connectors which are designed to be connected to the two phases and ground respectively of an electrical system. The other body is boxlike in form, surrounds the three connectors and has three holes in the front through which the three connectors pass upon compression of the helical spring, i.e. when the plug is inserted in the power outlet.

A locking device on the helical spring when compressed is provided at the side of the second body and is thrust toward the locking position by a second helical spring and toward the release position by excitation of an electromagnetic coil in whose turns is mounted a magnetic core bearing the pin. The excitation current of the coil is generated each time the ground current assumes values outside a preset range of variation by the threshhold comparator means of the ground current sensing device of the present invention, which compares the reference values of the voltages proportional to the ground current under normal conditions with the variations sensed by a sensor arranged in series with the central ground connector of the electrical plug. It is clear that, in case of variation of the ground current outside said field, the output signal of said comparator means is supplied to the excitation circuit of the electromagnetic coil which eliminates the lock and the plug snaps out of the power outlet because of the release of the helical spring wound around the central ground connector which tends to separate the two bodies of the plug and both of them from the power outlet.

It should be born in mind that the electronic components of the ground current sensing device can be implemented on a single chip, thus drastically reducing costs and size thereof.

The present invention will be illustrated in detail on the basis of a preferred and nonlimiting form of embodiment with reference to the annexed drawings wherein -

FIG. 1 shows a block diagram of the device for ground current sensing and command of activation of signal and/or protection devices,

FIG. 2 shows an electric diagram equivalent to a plug associated with the device in accordance with the present invention,

FIG. 3 shows a front cross section of the plug and current outlet, and

FIG. 4 shows a side cross section of the plug shown in FIG. 3.

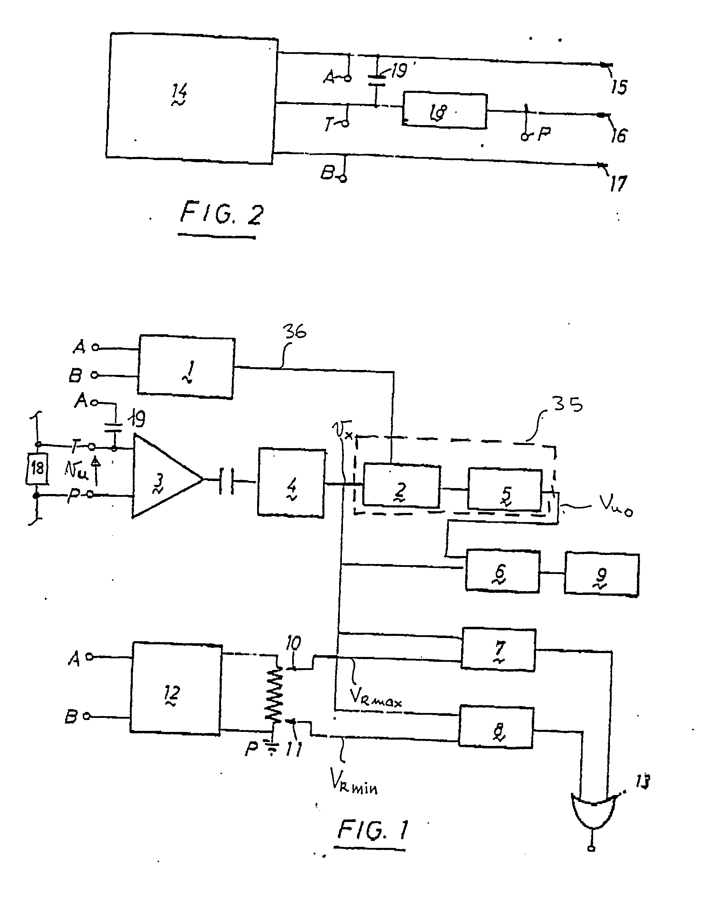

In the device shown in FIG. 1 a current sensor 18, e.g. a simple resistance in series with the ground conductor of the apparatus it is desired to protect, supplies a signal $V_u$, voltage proportional to the ground current flowing in the sensor. Said signal $V_u$ is supplied to inputs T and P of a signal amplifier 3 to then be rectified by the rectifier 4 and then supply a continuous signal $V_x$ proportional to the ground current sensed in the sensor 18. The signal $V_x$ is supplied to comparators 6, 7, 8 and to a memory circuit 35 gated to memorize said signal from a memorization signal 36 supplied by a gate circuit 1.

The comparator 6 has its other input connected to the output of the memorization circuit 35 to compare the signal $V_{uo}$ thereon with the signal $V_x$ and send a gate signal to a visual and/or acoustic alarm circuit 9 in case of deviation between $V_{uo}$ and $V_x$ to a preset degree. The comparator 6 then compares the instantaneous signal $V_x$ and the memorized signal $V_{uo}$ which is the value the signal $V_x$ had at the moment of the memorization impulse generated by the circuit 1. In this manner the alarm circuit 9 is activated if there occurs a ground current variation from the last memorization impulse greater than a preset value in the comparator.

The memorization impulses can be generated either initially when the apparatus whose ground current is sensed by the sensor 18 is connected to the power supply A-B or with advantage periodically with an interval between two memorization signals designed to sense rapid variation of the ground current due to failure of the ground insulation of the apparatus under control.

In practice the circuit 1 fixes the instant the reference voltage must be memorized, i.e. the delay or the period of time after which said reference voltage proportional to the ground current is memorized. This period can be adjusted by varying the time constant of the circuit 1.

To the comparators 7 and 8 are supplied, in addition to the signal $V_u$, reference signals, maximum $V_{Rmax}$ and minimum $V_{Rmin}$ respectively, taken by two potentiometers 10 and 11 at the output of a reference voltage generator 12. The comparators 7 and 8 generate at the output an activation signal when $V_x$ exceeds the value $V_{Rmax}$ and an activation signal when $V_x$ falls below the value $V_{Rmin}$ respectively. Said activation signals are combined by an OR port 13 whose output is connected to control circuits of the protective device activators, not shown since they may be of known type, e.g. remote control switches.

The values of $V_{Rmax}$ and $V_{Rmin}$ are adjustable as desired and thus define the range of variability desired for the signal $V_x$ proportional to the ground current outside of which appropriate measures must be taken as explained above in case of disconnection of the ground connection or excessive current to ground.

A condenser 19 having a value between 0.1 and a few hundred nF is connected in parallel between one of the phase A or B conductors and the ground conductor downstream from the sensor 18 and has the function of supplying a minimum ground current threshhold if said threshhold falls below the minimum detectable limit, e.g. around ten microamperes, so as to always detect detachment of the ground conductor upstream from the condenser ground connection. The condenser 19 is therefore connected physically downstream from the section of the ground conductor whose connection it is desired to keep under control. For example, an advantageous position for the condenser connection could be directly to the ground terminal of the metal container of the apparatus to be monitored.

The memorization circuit can be accomplished in any manner contemplated in the known art. For example, as shown in FIG. 1, a converter A/D 2 memorizing in numerical form the value of voltage $V_x$ proportional to the ground current, when the consent circuit 1 generates a gate signal, could be used. The voltage level thus read and memorized is reconverted in analog form by a digital/analog converter 5 to form the reference level $V_{uo}$ supplied to an input of the comparator 6.

FIG. 2 illustrates the electrical diagram equivalent to a plug 14 equipped with the ground current detection device of the present invention.

The plug 14 has three connectors 15, 16 and 17 and a ground current sensor 18 made up of a resistance inserted in series with the male ground connector 16. Through the terminal pairs A, B and T, P the voltages are taken to operate the device of FIG. 1 for detection of the ground current and control of activation of the protective devices.

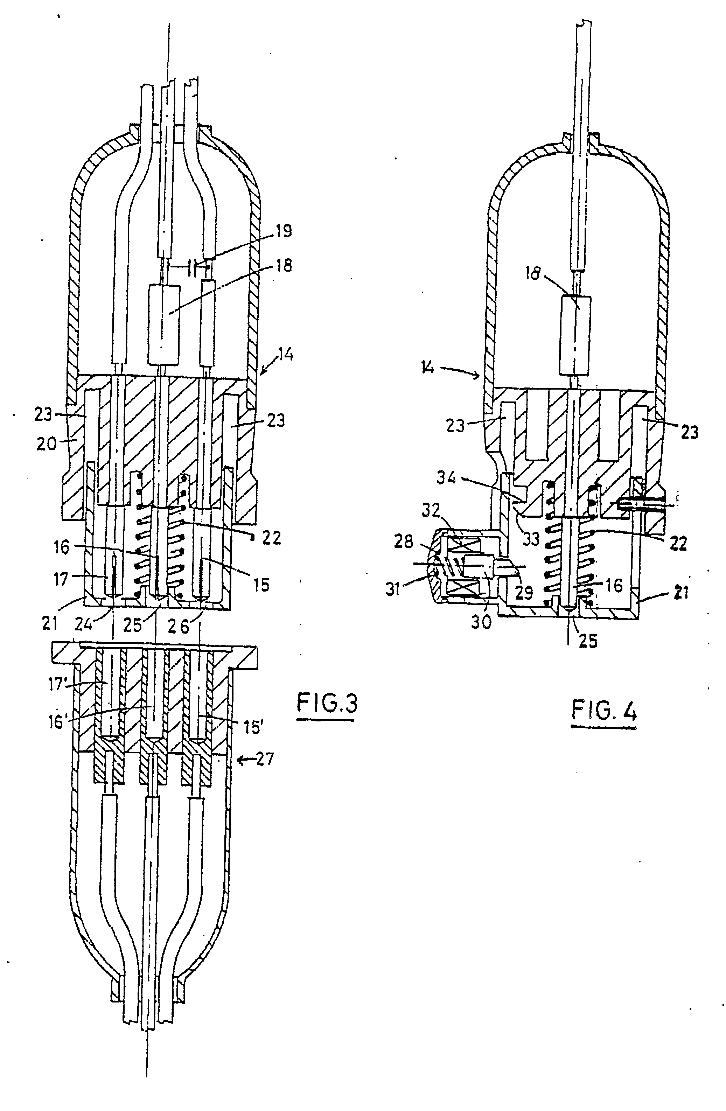

In FIG. 3 reference number 14 indicates generally an electrical plug having two bodies 20 and 21 and three male connectors 15, 16, 17. The body 20 acts as a conventional support for the male connectors 15, 16, 17 while the body 21 with a boxlike form is joined to the body 20 through a helical pressure spring 22 which is wound around the central ground connector 16 and whose ends are engaged in corresponding projections of the two bodies 20, 21. Upon compression of the helical spring 22 the sides of the body 21 slide in a corresponding cavity 23 shaped in the body 20 in such a manner that the body 21 penetrates completely the body 20 and is fixed in this position by a locking device which will be described below. Under these conditions the three connectors 15, 16, 17, passing through three corresponding holes 24, 25, 26 in the body 21, are ready to be inserted in the power outlet indicated generally by reference number 27 and equipped with female connectors $15'$, $16'$, $17'$.

The cross section of FIG. 4 shows the plug 14 with the locking device 28 mounted on one side of the body 21. The locking device 28 comprises a retainer 29 made integral with a core of magnetic material 30 which is movable under the effect of a pressure spring 31 between the windings of a coil 32 whose excitation circuit (not shown) is connected to the output of the OR port 13 of the device for detection of the ground current (FIG. 1). Upon compression of the helical spring 22 the sides of the body 21 slide as mentioned above into the cavity 23 of the body 20 until the retainer 29 with front end beveled comes into contact with the pin 33 with a mirror image bevel, passes it due to the compression effect of the helical spring 31 and penetrates the cavity 34, thus causing locking of the electrical plug 14 in operating position. It is clear that when a signal is present at the output of the OR port 13 (FIG. 1) the excitation circuit of the coil 32 powered with this signal will cause movement of the magnetic core 30 in the direction of compression of the spring 31 and withdrawal of the retainer 29 from the cavity 34. Consequently the spring 22 will operate on the body 21 and push it away from the body 20, causing withdrawal of the electrical plug 11 from the power outlet 27.

Thus, since a signal at the outlet of the OR port 13 (FIG. 1) indicates that the ground current has a value outside the tolerated variability range, this circumstance causes, in the specific case of application of the ground current sensing device to the above described electrical plug 11, snapping out thereof from the power outlet 27.

This preferred form of embodiment has been described with reference to single-phase current. It will be easy for those skilled in the art to introduce the appropriate modifications for application in case of 3-phase power supply without exceeding the scope of the claims set forth below.

In case of a direct current power supply the current sensor amplifier can be operational and the condenser 19 can be replaced by an electric resistance of appropriate value designed to create currents of sufficient amperage.

## Claims

1. Safety device for detecting ground current in coverings and containers of electrical equipment characterized in that it comprises ground current sensing means connected in series with the ground conductor of the equipment and designed to supply a signal proportional to the ground current, first and second threshhold comparator means to whose inputs there is supplied the aforesaid signal proportional to the ground current in the same manner as reference signals supplied by a generator and proportional to a maximum and a minumum ground current value respectively to define a range of variability thereof, an OR port connected to the outputs of the aforesaid first and second theshhold comparator means and whose output is connected to means of signalling and/or activating protection devices.

2. Device in accordance with claim 1 characterized in that it provides further means of memorization of the signal proportional to the ground current to supply a reference signal to third threshhold comparator means to whose other input is sent the instantaneous value of the signal proportional to the ground current, means of gating of memorization operating on said memorization means, means of visual and/or acoustic signalling which supply a response to the output signal of said third threshhold comparator means.

3. Device in accordance with claim 2 characterized in that the memorization means comprise analog-digital converter means for memorizing in numerical form a voltage value representing said signal proportional to the ground current and analog-digital converter means connected to the output of the aforesaid analog-digital means and with their output connected to the input of the third threshhold comparator means to supply said reference signal.

4. Device in accordance with claim 2 characterized in that the memorization gate means operate on the memorization means periodically at preset intervals.

5. Device in accordance with claims 1 and 2 characterized in that the aforesaid ground current sensing means are made up of a resistor connected in series with the ground conductor of the electrical equipment.

6. Device in accordance with claims 1 and 2 characterized in that a condenser is connected between the conductor of one of the phases of the supply current and the ground conductor of the electrical equipment to derive from the former a current which flows into the latter to obtain a detectable level of ground current.

7. Device in accordance with claim 6 characterized in that the condenser has a value between a few tens and a few hundred nanofarad.

8. Electrical safety plug comprising three contact conductors for connection to the two phases and ground respectively of an electrical system and a body supporting said conductors characterized in that it comprises a ground current sensor connected in series with the central ground conductor and a condenser connected in parallel between the ground conductor and one of the other two conductors, a body with an open boxlike form arranged in such a manner as to surround the three conductors of the plug and having three through holes corresponding to the ends of the three conductors, the sides of this second body being able to slide in a corresponding longitudinal cavity provided peripherally and internally to the supporting body, elastic pressure means connecting the two bodies in such a manner that, due to the effect of their compression, the three conductors integral with the supporting body pass through the holes in the boxlike body and are ready to be inserted in an electrical power outlet, locking means provided laterally and externally to the second body and which are associate with means of control of their axial movement in such a manner as to engage operationally with a corresponding cavity in the supporting body of the conductors when said elastic means are compressed and disengage from said cavity in response to an electrical signal supplied to said control means and indicating an anomaly in the ground current flowing in the central conductor.

9. Electrical safety plug in accordance with claim 8 characterized in that said elastic pressure means consist of a helical spring wound around the central ground conductor and whose ends engage in corresponding projections of the two bodies of the electrical plug.

10. Electrical safety plug in accordance with claim 8 characterized in that said locking means comprise a retainer integral with a core of magnetic material which slides under the effect of a pressure spring between the turns of an electromagnetic coil whose excitation circuit constitutes said control means supplied with the signal indicating an anomaly in the ground current.

11. Electrical safety plug in accordance with claims 8 and 10 characterized in that said retainer consists of a pin with a beveled face which in the compression movement of the aforesaid elastic means connecting the two bodies of the plug engages against a fin with mirror image bevelling of the body supporting the plug conductors and penetrates thereafter the aforesaid cavity of said body.

12. Electrical safety plug in accordance with claims 8 and 11 characterized in that it is equipped with the safety device in accordance with claims 1 to 7.

13. Electrical safety plug in accordance with claims 8, 10 and 12 characterized in that the excitation circuit of the coil of the locking means is connected to the output of the OR port of the safety device to detect the ground current in accordance with claims 1 to 7.

FIG. 2

FIG. 1

FIG.3

FIG. 4